# EUROPÄISCHE PATENTSCHRIFT

(11) **EP 2 932 481 B1**
(45) Veröffentlichungstag und Bekanntmachung des Hinweises auf die Patenterteilung: **04.07.2018**
(21) Anmeldenummer: 13820882.2
(22) Anmeldetag: 16.12.2013
(51) Int. Cl.: G07F 7/06

(54) **EINKAUFSWAGEN MIT DOCKINGSTATION UND PFANDSCHLOSS**
SHOPPING TROLLEY WITH DOCKING STATION AND COIN DEPOSIT LOCK
CHARIOT POURVU D'UNE STATION D'ACCUEIL ET D'UN CONSIGNEUR

(30) Priorität: 14.12.2012 AT 12982012; 14.12.2012 AT 12992012
(43) Veröffentlichungstag der Anmeldung: 21.10.2015
(73) Patentinhaber: Tilbürger, Frank, 27777 Ganderkesee (DE)
(72) Erfinder: Tilbürger, Frank, 27777 Ganderkesee (DE)
(74) Vertreter: Ellmeyer, Wolfgang
(86) Internationale Anmeldenummer: PCT/IB2013/002773
(87) Internationale Veröffentlichungsnummer: WO 2014/091296

(56) Entgegenhaltungen:
- WO-A1-98/55954
- DE-A1- 19 621 823
- KR-A- 20120 031 768
- NL-C1- 1 010 245
- US-A1- 2004 111 320
- US-A1- 2005 035 198

## Beschreibung

Die Erfindung betrifft einen Einkaufswagen mit einer Verbindungsmöglichkeit mit einem tragbaren elektronischen Gerät.

### HINTERGRUND DER ERFINDUNG

Seit langer Zeit werden kleine Fachgeschäfte zunehmend vom Markt verdrängt und sind heute großteils durch Supermärkte, z.B. Lebensmittel- oder Baumärkte, ersetzt. Diese nehmen immer größere Dimensionen an, weswegen es für die Kunden immer schwieriger wird, sich in solchen riesigen Geschäften zurechtzufinden. Zwar verfügen die meisten großen Supermärkte und Baumärkte über Leitsysteme in Form von Farbcodes bestimmter Abteilungen oder auch Kennzeichnungen der einzeinen Regale, diese sind jedoch aus großer Entfernung oft nicht ausreichend gut erkennbar, speziell für Menschen mit einer Sehbehinderung.

Darüber hinaus ist es speziell in den letzten Jahren Usus geworden, bestimmte Waren oder Warenhinweisschilder mit einem so genannten QR-Code ("quick response code") zu versehen, der von einem mit Kamera ausgestatteten, tragbaren elektronischen Gerät wie etwa einem Mobiltelefon oder tragbaren PC (z.B. Notebook, Netbook oder Tablet-PC) eingelesen werden kann und für den Kunden Zusatzinformationen über die Ware bereitstellt. Durch die immer länger werdenden Wege und die dementsprechend erhöhte Aufenthaltszeit im Supermarkt kommt es allerdings häufig zu einem vorzeitigen Leerlaufen des Akkus des Geräts.

Auf der anderen Seite stellt die Notwendigkeit, in Einkaufswagen mit Sperrkette und Pfandschloss ein Pfand einzulegen, um einen Wagen von der Einkaufswagenschlange lösen zu können, gelegentlich ein Problem dar, wenn der Kunde über keine entsprechende Münze verfügt - speziell, wenn die Einkaufswagenschlange weit von der nächsten Kasse des Supermarkts entfernt ist, z.B. auf einem Parkplatz.

WO 98/55954 A1 offenbart ein unter anderem auf einem Einkaufswagen montiertes mobiles Computersystem, das eine Dockingstation für ein tragbares elektronisches Gerät, das "Kundenterminal" oder "Datensammelvorrichtung" genannt wird, sowie diverse weitere, am Wagen angebrachte Geräte umfasst, wie z.B. Scanner, Drucker, Kreditkarten-Lesegeräte und dergleichen. Das tragbare elektronische Gerät ist in seiner Form exakt an die Dockingstation, d.h. eine Ausnehmung darin, eingepasst, kann aber aus dieser entnommen werden. Das Terminal steht in drahtloser Verbindung mit einem Zentralcomputer, um einem damit operierenden Kunden oder Verkäufer Informationen zu übermitteln, und ist batteriebetrieben. Die vorzugsweise an der Griffstange des Wagens montierte Dockingstation umfasst ihrerseits eine Spannungsquelle zum Laden der Batterie des Terminals, wenn dieser in die Dockingstation eingesetzt ist.

US 2005/035198 A1 offenbart ein ähnliches mobiles Computersystem, das unter anderem an einem herkömmlichen Einkaufswagen (z.B. im Kindersitz) montierbar ist, jedoch eher für einen Verkäufer und nicht für einen Kunden in einem Geschäft konzipiert ist und kann daher zusätzlich auch Kassenladen, Papierkörbe, Etikettendrucker und dergleichen umfassen. Auch hier ist ein "drahtloser Computer" in eine Dockingstation einsetzbar und aus dieser entnehmbar und kann in eingesetztem Zustand von selbiger mit Strom versorgt, d.h. aufgeladen, werden. Erneut sind das tragbare elektronische Gerät und die Dockingstation entweder exakt aneinander angepasst, oder das Gerät ist an einer Trägerplatte der Dockingstation fix montiert, um Diebstahl vorzubeugen.

WO 2006/117627 A1 beschreibt ein fix in der Griffstange eines Einkaufswagens montiertes Display, das mehrere Anschlüsse, darunter auch USB-Ports, aufweisen kann. Darin ist eine Batterie vorgesehen, die nach dem Verbinden des Einkaufswagens mit einem weiteren in einer Einkaufswagenschlange von einer externen Spannungsquelle mittels Verbindungskabeln zwischen den einzelnen Wägen aufladbar ist.

WO 2010/123427 A1 offenbart einen Einkaufswagen, der einen Rotor umfasst, der mit einem im Boden befindlichen Stator zusammenwirkt und somit sowohl als Wegfahrsperre als auch als Stromgenerator wirkt. Optional umfasst der Einkaufswagen daher auch einen Akkumulator und/oder eine oder mehrere Anschlüsse zur Stromentnahme.

US 2012/119874 A1 offenbart eine Basisstation oder Dockingstation für ein tragbares elektronisches Gerät, die einen Riegelmechanismus für das Gerät und einen RFID-Reader umfasst, so dass der Riegelmechanismus bei Vorliegen einer Wechselwirkung des RFID-Readers mit einem z.B. in einer Kundenkarte untergebrachten RFID-Chip lösbar ist.

KR 2012/0031768 A beschreibt einen Einkaufswagen mit einem fix an der Griffstange montierten Benutzerterminal und einem elektrisch lösbaren Riegelmechanismus.

US 5.513.507 A offenbart schließlich ein Pfandschloss für einen Einkaufswagen oder Gepäckstrolley mit einem elektromagnetischen Riegelmechanismus, der mit einer Magnetkarte entriegelbar ist.

Diese Dokumente nach dem Stand der Technik lösen jedoch die eingangs beschriebenen Probleme nur unzureichend, weswegen es ein Ziel der Erfindung war, umfassendere Lösungen bereitzustellen.

### OFFENBARUNG DER ERFINDUNG

Das obige Ziel erreicht die Erfindung durch Bereitstellung eines Systems, umfassend einen Einkaufswagen und ein tragbares elektronisches Gerät, wobei der Einkaufswagen einen Warenkorb mit einer Griffstange und zumindest drei Rädern an seiner Unterseite, eine Sperrkette und ein Pfandschloss zur Verbindung des Einkaufswagens mit einem anderen der gleichen Bauart in einer Einkaufswagenschlange umfasst, wobei am Einkaufswagen eine Dockingstation für das tragbare elektronische Gerät vorgesehen ist, die eine Halterung für das Gerät, eine Spannungsquelle sowie Mittel zur Energieübertragung von der Spannungsquelle auf das Gerät umfasst, wobei:
a) die Dockingstation einen Detektor zum Detektieren des Einsetzens oder Einlegens des tragbaren elektronischen Geräts in die Halterung und/oder des Verbindens des Geräts mit den Energieübertragungsmitteln umfasst;
b) das Pfandschloss einen elektromagnetischen Riegelmechanismus umfasst, der elektrischer Verbindung mit dem Detektor der Dockingstation steht;
c) der Detektor der Dockingstation in der Lage ist, bei Detektion des Einsetzens des tragbaren elektronischen Geräts in die Halterung und/oder des Verbindens des Geräts mit den Energieübertragungsmitteln ein elektrisches oder elektromagnetisches Signal an den elektromagnetischen Riegelmechanismus des Pfandschlosses auszusenden;
d) der elektromagnetische Riegelmechanismus des Pfandschlosses einen zum Empfangen des Signals geeigneten Empfänger umfasst, der in der Lage ist, nach Empfang des Signals die Entriegelung der Sperrkette auszulösen;
e) das tragbare elektronische Gerät ein Mobiltelefon oder ein Tablet-PC ist, das/ der einen Akkumulator umfasst, der mittels Energieübertragung von der Spannungsquelle (8) über die Energieübertragungsmittel (9) aufladbar ist; und
f) die Dockingstation (6) einen integrierten Datenspeicher und/oder einen Empfänger zum Empfangen von Daten von einer externen Datenquelle umfasst und dadurch in der Lage ist, Daten an das in die Dockingstation (6) eingesetzte, tragbare elektronische Gerät weiterzuleiten.

An einem solchen Einkaufswagen des Systems der Erfindung kann der Kunde somit den Akku seines tragbaren elektronischen Geräts aufladen. Dies kann entweder drahtlos, d.h. mittels Induktionsladung oder durch Verbindung mit einem Anschluss der Dockingstation für das Gerät erfolgen. Gleichzeitig wird jedoch durch Einsetzen oder Einlegen des tragbaren elektronischen Geräts in die Halterung der Dockingstation und/oder durch Verbinden des Geräts mit einem Anschluss der Dockingstation das Pfandschloss entriegelt, wodurch das tragbare elektronische Gerät das herkömmliche Pfand ersetzt. Der Kunde braucht demnach keine passende Münze bei sich zu tragen, sondern bloß ein tragbares elektronisches Gerät, das heutzutage ein Großteil der Bevölkerung in Form eines Mobiltelefons - oder in jüngster Zeit auch eines Tablet-PCs - ohnehin mit sich trägt. Da das Gerät das herkömmliche Pfand ersetzt, wird hierin das Schloss durchwegs weiterhin als Pfandschloss bezeichnet, unabhängig davon, ob es auch zur Aufnahme eines herkömmlichen Pfands in der Lage ist oder nicht, wie dies nachstehend näher erläutert wird. Durch das System der vorliegenden Erfindung wird somit erstmals ein Einkaufswagen zur Verfügung gestellt, an dem der Kunde ein eigenes (d.h. selbst mitgebrachtes) Mobiltelefon bzw. einen Tablet-PC laden und gleichzeitig als "Pfand" für das Pfandschloss verwenden kann.

Das tragbare elektronische Gerät ist aus obigen Gründen ein Mobiltelefon, z.B. ein Smartphone, oder ein Tablet-PC, obwohl prinzipiell beispielsweise auch Laptops, Notebooks oder Netbooks mit physikalischer Tastatur von der Erfindung umfasst sind, sofern diese in die Halterung für das Gerät einsetzbar sind und in der Lage sind, eine elektrische Verbindung, z.B. auch eine Funkverbindung, mit der Vorrichtung herzustellen. Die Möglichkeit, den Bildschirm des Geräts einzusehen und gegebenenfalls das Gerät auch zu bedienen, während es sich in einer Halterung befindet, ist freilich vor allem bei Mobiltelefonen und Tablet-PCs gegeben. Unter die Bezeichnung Tablet-PC fallen allerdings nicht nur die üblichen "Tabs", wie z.B. das "iPad" von Apple oder das "Galaxy Tab" von Samsung, sondern auch Laptops mit abnehmbarem Bildschirm, der dann als Tablet-PC benutzbar ist.

Die Art des Einkaufswagens ist dabei nicht speziell eingeschränkt, und es sind alle üblichen Modelle von Einkaufswagen erfindungsgemäß mit einer Dockingstation und einem entsprechenden elektrisch oder elektromagnetisch entriegelbaren Pfandschloss ausrüstbar. Da das Prinzip der Erfindung uneingeschränkt auch für Gepäckstrolleys anwendbar ist, wie sie z.B. auf Flughäfen und Bahnhöfen zur Verfügung stehen, sind hierin unter der Bezeichnung "Einkaufswagen" durchwegs auch solche Trolleys zu verstehen, sofern nicht ausdrücklich das Gegenteil erwähnt wird.

Unter dem Begriff "Dockingstation" ist eine Lade- oder Andockstation für das elektronische Gerät mit entsprechenden Anschlüssen bzw. Verbindungsmöglichkeiten (d.h. mitunter auch drahtlos) mit einer Spannungsquelle und gegebenenfalls einem in der Dockingstation integrierten Datenspeicher zu verstehen, die eine Halterung umfasst, in oder auf die das Gerät ein- oder aufgelegt oder -gesetzt und vorzugsweise in dieser Position arretiert werden kann. Somit dient die Dockingstation jedenfalls zum Aufladen des Geräteakkus, ist aber zusätzlich in der Lage, Daten, wie z.B. Werbung oder einen Lageplan des Geschäfts, in den Speicher des angedockten Geräts zu überspielen. Zu diesem Zweck umfasst die Dockingstation vorzugsweise einen Datenspeicher, insbesondere einen Speicherchip. Sie kann aber - alternativ oder zusätzlich dazu - auch mit einem Empfänger ausgestattet sein, der in der Lage ist, Daten von einer externen Datenquelle, z.B. von einem Server des Geschäfts, zu empfangen und an das angedockte elektronische Gerät weiterzuleiten.

Als zur Wechselwirkung mit der Dockingstation geeignetes Schloss sind zahlreiche Ausführungsformen von elektromagnetischen Schlösssern, d.h. Elektroschlössern, im Handel frei erhältlich, so dass der einschlägige Fachmann daraus leicht ein konstruktiv und kostenmäßig geeignetes Modell auswählen und, gegebenenfalls nach Anpassung des Riegelmechanismus an die Form der Sperrkette, an einem ansonsten herkömmlichen Einkaufswagen anbringen kann.

So sind etwa sowohl mechanische als auch mechanisch-elektrische Pfandschlösser von der Systec POS-Technology GmbH in Puchheim bei München (DE), oder von der Wanzl Metallwarenfabrik GmbH in Leipheim (DE), erhältlich. Letztere bietet neben Pfandschlössern beispielsweise auch RFID-Tracking- und Radsperrsysteme für Einkaufswagen an.

In einer bevorzugten Ausführungsform der Erfindung umfasst die Vorrichtung eine Halterung für das tragbare elektronische Gerät, die ihrerseits einen Sperrmechanismus zur Fixierung des tragbaren elektronischen Geräts darin umfasst, wobei der Sperrmechanismus - alternativ oder zusätzlich zur Herstellung einer elektrischen Verbindung des tragbaren elektronischen Geräts mit einem Anschluss der Dockingstation - in mechanischer und/oder elektrischer Wirkverbindung mit dem Riegelmechanismus des Pfandschlosses steht, so dass (auch) durch Betätigung des Sperrmechanismus nach dem Einlegen oder Einsetzen des tragbaren elektronischen Geräts in die Halterung eine Entriegelung des Riegelmechanismus des Pfandschlosses auslösbar ist.

Mittels einer solchen Halterung mit eigenem Sperrmechanismus wird verhindert, dass das tragbare elektronische Gerät aus der Halterung herausfällt. Dieser Sperrmechanismus sollte auf einfache mechanische Weise entriegelbar sein, z.B. durch Knopfdruck oder Betätigung eines Hebels, vorzugsweise jedoch durch Einsetzen eines Stifts oder ähnlichen Bauteils, z.B. in Schlüsselform, der nach dem Einrasten des Sperrmechanismus von der Halterung (oder auch an einer anderen Stelle des Einkaufswagens) abziehbar ist und getrennt vom Einkaufswagen aufbewahrt werden kann. Dies stellt eine Diebstahlsicherung für das tragbare elektronische Gerät dar, so dass der Kunde beruhigt seinen Einkauf tätigen kann, ohne den Einkaufswagen stets im Blickfeld haben zu müssen.

Das Pfandschloss kann gemäß vorliegender Erfindung zusätzlich zur Entriegelung nach Einsetzen des tragbaren elektronischen Geräts in die Dockingstation, gegebenenfalls unter gleichzeitiger Herstellung einer elektrischen Verbindung, auch auf herkömmliche Weise durch Einführen eines Pfands entriegelbar sein, in welchem Fall das Pfandschloss auch einen Schlitten zum Einlegen eines herkömmlichen Pfands, wie z.B. einer Münze, umfasst. Dies ermöglicht eine Entriegelung des Schlosses auch in Fällen, in denen keine Verbindung zwischen dem Detektor der Dockingstation und dem Riegelmechanismus des Schlosses herstellbar ist, z.B. bei mechanischem oder elektronischem Versagen oder Strommangel im System.

In jedem Fall kann vorgesehen sein, dass der Sperrmechanismus, der das tragbare elektronische Gerät in der Halterung arretiert, nur dann lösbar ist, wenn die Sperrkette eines weiteren Wagens - oder, wenn dies möglich ist, noch zusätzlich ein Pfand, also etwa eine Münze - in das Pfandschloss eingeführt wird. Dies verhindert, dass der Einkaufswagen dem Kunden nach Entnahme des tragbaren elektronischen Geräts aus der Halterung auch ohne Pfand zur Verfügung steht, ohne dass dieser den Wagen zu einer Einkaufswagenschlange zurückbringen müsste, um sein Pfand zurückzuerhalten. In Fällen, wo der Einkaufswagen mit einem elektronischen Sicherheitssystem, das wirksam verhindert, dass der Wagen über eine bestimmte Entfernung vom Geschäft weg oder über eine Auslöselinie (z.B. ein unterirdisches Antennenkabel) hinweg bewegt wird, also z.B. mit einer Radkralle von Rocateq in Heilbronn (DE), oder einem "Radlok"-System von Wanzl in Leipheim (DE), ausgerüstet ist, kann der Schlitten für ein herkömmliches Pfand jedoch auch gänzlich entfallen.

Das vom Detektor der Dockingstation ausgesandte Signal kann entweder ein elektrisches Signal, ein Funksignal oder ein Infrarotsignal oder eine Kombination davon sein. In allen Fällen wird das Signal zu einem entsprechenden Empfänger des Pfandschlosses geleitet, der daraufhin die Sperrkette freigibt. Elektrische Signale haben der Vorteil, dass jedenfalls nur das Schloss des ersten Einkaufswagens in einer Einkaufswagenschlange entriegelt wird, während im Falle von Infrarotsignalen eine direkte optische Verbindung zwischen dem Detektor der Dockingstation und dem Empfänger des Riegelmechanismus gegeben sein muss, was möglicherweise vom Benutzer, d.h. dem den Einkaufswagen benutzenden Kunden, unbeabsichtigt verhindert wird oder diesem gar nicht genau bewusst ist. Bei Nutzung eines Funksignals ist zwar die Reichweite des Senders exakt so zu wählen, dass nicht auch die Schlösser weiterer Einkaufswagen in der Schlange entriegelt werden, es bietet jedoch gegenüber dem elektrischen Signal den Vorteil, dass keine elektrische Leitung zwischen der Dockingstation und dem Pfandschloss vorliegen muss.

Eine kombiniert mechanisch-elektrische Wirkverbindung zwischen dem Sperrmechanismus der Halterung und dem elektromagnetischen Riegelmechanismus des Schlosses kann beispielsweise über ein piezoelektrisches Element hergestellt werden, auf das bei Betätigung des Sperrmechanismus nach dem Einlegen oder Einsetzen des Geräts in die Halterung ein Druck ausgeübt wird, aufgrund dessen das piezoelektrische Element eine Spannung erzeugt, die vom Detektor der Dockingstation feststellbar ist, durch den daraufhin die Entriegelung des Pfandschlosses auslösbar ist. Derartige piezoelektrische Elemente sind im Handel als Piezoschalter, -sensoren, -taster und -aktuatoren erhältlich, z.B. von Danielson in Hardenberg (NL), Meggitt Sensing Systems in Fribourg (CH), PCB Piezotronics Inc. in Depew (NY, USA) oder der Kistler GmbH in Wien (AT).

Die Spannungsquelle des erfindungsgemäßen Systems kann eine einfache Batterie sein, ist aber insbesondere ein Akkumulator, der selbst wiederaufladbar ist, was vorzugsweise dann erfolgt, wenn der Einkaufswagen wieder mit der Einkaufswagenschlange verbunden wird. Form und Dimensionen der Batterie oder des Akkumulators sind nicht speziell eingeschränkt. Vorzugsweise sind sie jedoch dergestalt, dass die Spannungsquelle innerhalb der Griffstange des Einkaufswagens untergebracht werden kann. Die Spannung ist natürlich so zu wählen, dass damit die Akkus der meisten tragbaren elektronischen Geräte aufladbar sind, die derzeit am häufigsten Lilonen-Akkus mit 3,7 V Spannung sind.

Wie oben erwähnt, kann die Energieübertragung zum Laden des Akkus des tragbaren elektronischen Geräts über eine Stromleitung oder auch drahtlos erfolgen. Im ersteren Fall umfassen die Energieübertragungsmittel vorzugsweise zumindest einen elektrischen Stecker (nachstehend kurz als Stecker bezeichnet) und ist der Detektor in der Lage, eine elektrische Verbindung zwischen dem tragbaren elektronischen Gerät und dem zumindest einen Stecker zu detektieren und bei Detektion einer solchen elektrischen Verbindung die Entriegelung des Pfandschlosses auszulösen. Vorzugsweise wird als solcher Stecker ein Modell ausgewählt, das einem von zahlreichen Herstellern von Laptops, Tablet-PCs und Smartphones akzeptierten Standard entspricht. Derzeit wird ein solcher Stecker daher besonders bevorzugt ein USB-Stecker sein, für Mobiltelefone insbesondere ein dem Micro-USB-Standard entsprechender Stecker. Über diesen Stecker können zudem nicht nur Energie sondern auch Daten übertragen werden.

Der zumindest eine Stecker kann entweder fix, d.h. unbeweglich, am Einkaufswagen, vorzugsweise an oder in der Halterung für das tragbare elektronische Gerät oder an der Griffstange, vorgesehen sein oder über ein Kabel damit verbunden sein, z.B. ein sich auf eine Spule automatisch aufwickelndes oder straff spannendes Kabel. Die Verbindung über ein Kabel bietet mehr Freiheiten bezüglich der Lage und Form der Halterung, vor allem bezüglich des Abstands des in die Halterung eingesetzten tragbaren elektronischen Geräts von der Griffstange und der Lage des Anschlusses, also z.B. des USB-Anschlusses, am Gerät, der etwa bei Smartphones, je nach Modell, seitlich oder am unteren Rand des Geräts vorgesehen sein kann.

Aufgrund dessen, dass unter den verschiedenen Geräteherstellern kein einheitlicher Standard für derartige Stecker, auvch nicht für USB-Stecker, existiert und teilweise von ein und demselben Hersteller im Lauf der Zeit das Steckerformat geändert wird, sieht die Erfindung vorzugsweise vor, dass mehrere Stecker unterschiedlichen Formats vorgesehen sind. Diese können im Falle von Änderungen bei den geläufigsten Formaten natürlich auch nachträglich gegen jeweils aktuelle Steckerformate ausgetauscht werden. In diesem Fall sind alle diese Stecker vorzugsweise nicht fix, sondern über ein Kabel, z.B. ein auf einer Spule aufgewickeltes Ausziehkabel wie oben beschrieben, an der oder in der Dockingstation montiert.

Da nicht nur die Steckerformate, sondern vor allem auch die Dimensionen der gemäß vorliegender Erfindung infrage kommenden tragbaren elektronischen Geräte stark schwankt, ist die Halterung in besonders bevorzugten Ausführungsformen der Erfindung größenverstellbar und so zur Aufnahme tragbarer elektronischer Geräte unterschiedlicher Größe angepasst. Vorzugsweise ist die Halterung dabei sowohl in horizontaler als auch in vertikaler Richtung größenverstellbar.

Eine besonders bevorzugte Ausführungsform der Halterung umfasst zwei auf einem beweglichen Gestänge getragene, horizontal zueinander verschiebbare L-Profile, die gemeinsam einen Rahmen für das tragbare elektronische Gerät bilden. Jedes der L-Profile kann an seiner Unterseite ein flächiges Teilelement aufweisen, die nicht in derselben Ebene liegen, aber dennoch gemeinsam eine Unterlage zum Auflegen des tragbaren elektronischen Geräts bilden. Bei Benutzung wird das tragbare elektronische Gerät mit zumindest zwei seiner Ränder auf die beiden flächigen Teilelemente aufgelegt und daraufhin die L-Profile auf dem Gestänge so lange zueinander verschoben, bis sie die vier Ränder des tragbaren elektronischen Geräts eng umschließen. Das Gestänge kann dabei mittels einer oder mehrerer Federn vorgespannt sein, um durch diese Federn in eine Ausgangsposition gedrückt oder gezogen zu werden, die entweder dem Mindest- oder dem Maximalabstand der L-Profile entsprechen kann.

Eine solche Ausführungsform ist vor allem für Smartphones und Tablet-PCs geeignet, die einerseits eine flache Bauweise und andererseits eine ausreichende Größe aufweisen, um im geöffneten Ausgangszustand der Halterung mit zumindest zwei Rändern auf den beiden flächigen Teilelementen aufliegen zu können. In diesem geöffneten Ausgangszustand weisen die Innenränder der beiden flächigen Teilelemente daher beispielsweise einen Abstand zueinander von maximal 10 cm auf, um ein herkömmliches Smartphone auflegen zu können, während die gegenüberliegenden Schenkel der beiden L-Profile im geöffneten Ausgangszustand einen Längsabstand von zumindest 25 cm und einen Breitenabstand von zumindest 20 cm aufweisen sollten, um auch die größten gängigen Tablet-PCs in die Halterung einlegen zu können.

Die L-Profile können ihrerseits ebenfalls aus zwei miteinander über ein Gestänge verbundenen Hälften bestehen, die in vertikaler Richtung zueinander verschiebbar sind, um auch die Dicke des von den beiden L-Profilen gebildeten Rahmens variieren zu können. Die vertikale Querschnittsform der L-Profil-Hälften ist dabei vorzugsweise ebenfalls L-förmig und noch bevorzugter die eines Viertelkreises, um das tragbare elektronische Gerät fest zu umschließen, ohne die Ränder zu beschädigen, d.h. einzudrücken oder zu zerkratzen. Aus demselben Grund bestehen die L-Profile vorzugsweise aus einem elastisch-nachgiebigen Kunststoffmaterial, z.B. Hartgummi, oder ihre Innenseiten sind mit einem solchen Material ausgekleidet.

Die Bestandteile der Gestänge, auf denen die zwei L-Profile montiert sind, und/oder jener, auf denen die beiden Hälften eines L-Profils montiert sind, müssen natürlich ebenfalls relativ zueinander beweglich sein, um die Profile oder Profilhälften aufeinander zu oder auseinander bewegen zu können. Sie können zu diesem Zweck entweder aneinander vorbei geführt werden, z.B. neben- oder untereinander (z.B. in Form von Scherenhebeln oder Hebel-Feder-Konstruktionen), oder auch ineinander verschoben werden (z.B. in Teleskopbauweise), was unter anderem von der Differenz zwischen dem minimalen und dem maximalen Abstand der Enden abhängt. Beispielsweise bieten sich für die vertikale Verschiebung der beiden Hälften eines L-Profils zwei ineinander gleitende Stangen an, da hier nur eine Abstandsdifferenz von wenigen Zentimetern, z.B. 2 bis 4 cm, abgedeckt zu werden braucht. Mit einem Maximalabstand von 4 cm kann sogar die Dicke eines herkömmlichen Laptops ganz leicht von den L-Profil-Hälften umschlossen werden.

Zur drahtlosen Energieübertragung auf das tragbare elektronische Gerät, d.h. Induktionsladung, umfassen die Energieübertragungsmittel vorzugsweise einen mit der Spannungsquelle verbundenen elektrischen Feldgenerator. Zu diesem Zweck muss das tragbare elektronische Gerät mit einer Induktionsspule ausgestattet sein, wie sie beispielsweise seit kurzem von mehreren Smartphone-Herstellern in ihren Geräten angeboten wird, z.B. im Deckel des Akkufachs. Wiederum sind natürlich die Spannung der Spannungsquelle und das von Generator erzeugte elektrische Feld an die Geräteakkus anzupassen, wozu der durchschnittliche Fachmann ohne übermäßiges Experimentieren in der Lage ist.

Um die Funktionalität des Einkaufswagens nicht einzuschränken und einen problemlosen Zugang zum Warenkorb sicherzustellen, aber auch um gute Sichtbarkeit und gegebenenfalls Bedienbarkeit des tragbaren elektronischen Geräts nach dem Andocken zu gewährleisten, ist die Halterung der Dockingstation vorzugsweise an der Griffstange des Warenkorbs montiert und kann dabei zentral oder auch am linken oder rechten Rand vorgesehen sein.

Wie oben erwähnt ist die Spannungsquelle vorzugsweise selbst ein Akkumulator, der durch Energieübertragung von einer externen Spannungsquelle aufladbar ist. Dieser Ladevorgang erfolgt vorzugsweise, nachdem der Einkaufswagen wieder an den dafür vorgesehenen Platz im oder vor dem Geschäft zurückgestellt wurde, und zwar erneut entweder über eine Stromleitung oder drahtlos. In einer bevorzugten Ausführungsform kann das Aufladen des Akkumulators erfolgen, nachdem der Einkaufswagen, der in diesem Fall über eine Sperrkette und ein Pfandschloss verfügen muss, über die Sperrkette mit einer Einkaufswagenschlange verbunden wurde, wobei die Sperrkette gleichzeitig als Stromleitung zur Energieübertragung von der externen Spannungsquelle auf den Akkumulator des Einkaufswagens dient. Alternativ oder zusätzlich dazu kann die Spannungsquelle der Dockingstation aber auch über eine Induktionsspule verfügen und von der externen Spannungsquelle drahtlos aufgeladen werden. Zu diesem Zweck ist vorzugsweise im Bereich der Einkaufswagenschlange an dem dafür vorgesehenen Platz ein elektrischer Feldgenerator vorgesehen.

Das Aufladen des Akkumulators als Spannungsquelle kann allerdings - zusätzlich oder alternativ zu den oben beschriebenen Optionen - auch bei Bewegung des Einkaufswagens erfolgen, nämlich indem ein oder mehrere Räder mit elektrischen Generatoren zum Aufladen des Akkumulators versehen werden, die die Bewegungsenergie in elektrische Energie umwandeln. In diesem Fall dienen die Generatoren als "externe Spannungsquelle".

Wesentlich ist gemäß bevorzugten Ausführungsformen der vorliegenden Erfindung vor allem zweierlei:
i) Die Dockingstation umfasst einen Detektor, der in der Lage ist, das Einsetzen des tragbaren elektronischen Geräts in die Halterung und/oder das Verbinden des Geräts mit dem Stecker festzustellen und daraufhin ein elektrisches Signal an das Pfandschloss auszusenden. In letzterem Fall kann die Detektion erfolgen, wenn eine elektrische Verbindung zwischen dem tragbaren elektronischen Gerät und der Spannungsquelle hergestellt wird, d.h. also beim Anschließen des Geräts an den Stecker, woraufhin eine im Detektor integrierte Steuereinheit ein elektrisches Signal erzeugt. Oder es kann durch das Einsetzen des Geräts in die Halterung und/oder durch das Aufsetzen auf den Stecker ein Schalter betätigt werden, der einen elektrischen Impuls aussendet. Zu diesem Zweck kann der Schalter beispielsweise ein piezoelektrisches Element, z.B. aus piezoelektrischer Keramik, umfassen, das bei Ausübung von Druck eine Spannung erzeugt. In jedem Fall wird vom Detektor ein elektrisches Signal an das Pfandschloss ausgesendet.
ii) Das Pfandschloss umfasst - anstelle des herkömmlichen Schlittens mit der Vertiefung für das Pfand oder auch zusätzlich dazu - einen elektromagnetischen Riegelmechanismus, der bei Empfang eines entsprechenden Signals vom Detektor entriegelt und die Sperrkette freigibt. Speziell wenn das Schloss keinen herkömmlichen Schlitten aufweist, kommt hierfür eine Reihe von üblichen Elektroschlössern (z.B. mit einem oder auch zwei horizontal verlagerbaren Treibriegeln) in Frage, von denen der durchschnittliche Fachmann leicht ein geeignetes auswählen, den Riegel an die Form der Sperrkette, oder umgekehrt, anpassen und an einem Einkaufswagen montieren kann.

Die Art der Halterung der Dockingstation ist generell nicht speziell eingeschränkt, solange das tragbare elektronische Gerät darauf oder darin getragen und gegen Herab- oder Herausfallen gesichert werden kann. Die Halterung kann beispielsweise ein einfaches dreidimensionales Gestänge oder Gitter, z.B. einen Korb, oder einen Rahmen umfassen, die jeweils ausreichende Steifigkeit aufweisen sollten und in die das tragbare elektronische Gerät eingelegt oder eingeschoben werden kann. Vorzugsweise umfasst sie jedoch eine ebene Fläche, z.B. eine Platte, die wiederum als Gitter ausgeführt sein kann, auf die das tragbare elektronische Gerät aufgelegt werden kann, wonach eine Arretierung des Geräts mittels eines oder mehrerer, an der Platte montierter, verschieb- oder verdrehbarer Riegel erfolgen kann, um das Gerät in der Halterung zu fixieren.

Die Halterung ist vorzugsweise so am Einkaufswagen, insbesondere an der Griffstange, montiert, dass das Display des angedockten tragbaren elektronischen Geräts für den Benutzer gut einsehbar ist, d.h. besonders bevorzugt einen Neigungswinkel zwischen 30° und 60°, noch bevorzugter von 45°, aufweist. Insbesondere kann der Neigungswinkel auch variierbar sein, um ihn an die Größe des Kunden anpassen zu können. Dazu kann beispielsweise die Halterung verdrehbar gleitend an einer im vertikalen Querschnitt kreisförmigen Griffstange montiert sein, wobei die Drehbarkeit mittels Schrauben variierbar sein kann, d.h. die Halterung nach dem Verdrehen in ihrer neuen Position arretiert werden kann.

Generell ist die Art der Befestigung der Halterung für das tragbare elektronische Gerät am Einkaufswagen, vor allem an der Griffstange, nicht speziell eingeschränkt. Sie kann beweglich oder starr montiert sein, beispielsweise, wie in den Figuren dargestellt, mittels vorzugsweise um die Stangenachse drehbarer Montageringe, -schellen oder -clips, über ein mit dem Warenkorb oder der Griffstange fest verschraubtes oder verschweißtes Gestänge, oder auch mittels direkter Verschraubung, Verschweißung oder Verklebung mit dem Warenkorb oder der Griffstange.

### KURZBESCHREIBUNG DER ZEICHNUNGEN

Nachstehend werden nichteinschränkende bevorzugte Ausführungsformen der vorliegenden Erfindung unter Bezugnahme auf die beiliegenden Zeichnungen näher beschrieben, die Folgendes schematisch darstellen:
Fig. 1 zeigt eine schematische Gesamtansicht eines Einkaufswagens des Systems der Erfindung;
Fig. 2 zeigt eine vergrößerte Detailansicht einer Ausführungsform der Dockingstation;
Fig. 3 zeigt eine teilweise aufgebrochene Ansicht eines Abschnitts der Griffstange eines Einkaufswagens; und
Fig. 4 zeigt eine bevorzugte Ausführungsform der Halterung für das tragbare elektronische Gerät.

### DETAILLIERTE BESCHREIBUNG DER ERFINDUNG

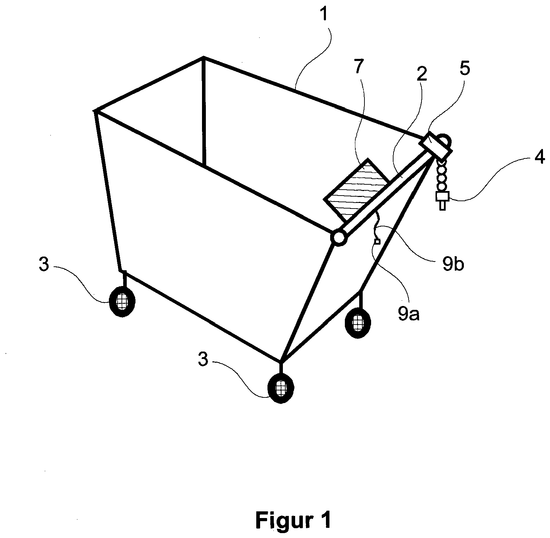

In Fig. 1 ist eine Gesamtansicht eines Einkaufswagens gemäß dem erfindungsgemäßen System dargestellt. Dieser umfasst einen Warenkorb 1 mit einer Griffstange 2 und vier Rädern 3 (wovon in der Zeichnung nur drei sichtbar sind) an seiner Unterseite, einer Sperrkette 4 und einem Pfandschloss 5 zur Verbindung des Einkaufswagens mit einem anderen der gleichen Bauart. An der Griffstange 2 ist eine Dockingstation für ein tragbares elektronisches Gerät vorgesehen, die eine Halterung 7 für das Gerät, eine (hier nicht dargestellte, weil in der Griffstange 2 untergebrachte) Spannungsquelle sowie Mittel 9 zur Energieübertragung von der Spannungsquelle auf das Gerät umfasst. Als Energieübertragungsmittel 9 ist in Fig. 1 ein Stecker 9a schematisch dargestellt, der über ein Kabel 9b mit der Spannungsquelle verbunden ist.

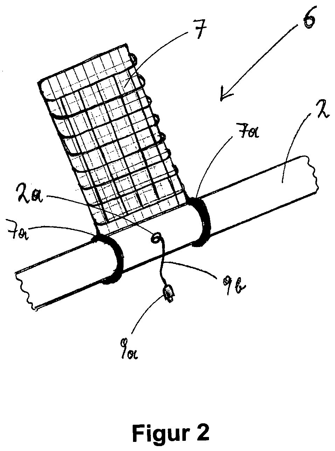

Fig. 2 zeigt eine vergrößerte Detailansicht einer relativ einfachen Ausführungsform der Dockingstation, bei der die Halterung 7 als Gitterkorb ausgeführt ist, in den von oben das tragbare elektronische Gerät, in diesem Beispielfall ein Smartphone, eingeführt werden kann. Mit 9a und 9b sind wiederum der Stecker, hier ein Micro-USB-Stecker, bzw. das Kabel zur Verbindung des Steckers mit der Spannungsquelle bezeichnet. Letztere ist erneut in der Griffstange 2 untergebracht und daher nicht dargestellt. Das Kabel 9b tritt durch eine Öffnung 2a aus der Griffstange 2 aus. Vorzugsweise befindet sich im Inneren der Stange 2 außerdem ein Aufroller, auf dem das Kabel 9b nach dem Abziehen des Steckers 9a automatisch aufgewickelt wird, bis der Stecker 9b an der Öffnung 2a ansteht, bzw. der das Kabel 9b straff zieht, nachdem der Stecker 9a in das tragbare elektronische Gerät eingesteckt wurde. Durch dieselbe - oder auch durch eine oder mehrere weitere Öffnungen 2a - können in bevorzugten Ausführungsformen weitere Stecker 9a nach außengeführt sein, um den für das jeweilige Gerät passenden Stecker auswählen zu können.

In Fig. 2 ist das Kabel 9b nur teilweise aus der Griffstange 2 herausgezogen dargestellt. Diese Länge würde ausreichen, wenn der Micro-USB-Anschluss des Smartphones am unteren Rand des Geräts vorgesehen ist. Befindet er sich hingegen an einem seitlichen Rand, muss das Kabel 9b noch weiter herausgezogen werden, um eine Verbindung mit dem Stecker 9a herstellen zu können. Dies dokumentiert den Vorteil eines über Kabel 9b mit der Spannungsquelle verbundenen Steckers 9a gegenüber einem fix an der Außenseite der Griffstange 2 montierten Stecker.

Die Halterung 7 ist in der hier gezeigten Ausführungsform mit zwei Montageringen 7a an der Griffstange 2 befestigt. Die Ringe 7a stehen vorzugsweise in einer gleitenden Verbindung mit der Griffstange 2, um den Neigungswinkel der Halterung 7 durch Drehen um die durch das Zentrum der Griffstange 2 verlaufende horizontale Achse benutzerabhängig einstellen zu können. Die Halterung 7 und die Ringe 7a bestehen vorzugsweise aus Kunststoff, z.B. Polypropylen, oder Leichtmetall, z.B. Aluminium, und sind weiters vorzugsweise einstücking miteinander verbunden, d.h. verschweißt.

Die Montageringe 7a sind vorzugsweise an ihrer Unterseite, ähnlich einer Rohrschelle, unterteilt und mit vertikalen Fortsätzen mit Durchgangsbohrungen versehen, durch die eine Schraube verläuft, mittels derer (und einer entsprechenden Mutter) die Festigkeit des Sitzes der Halterung auf der Griffstange einstellbar ist. Die Durchgangsbohrungen können auch ein eingefrästes oder angeschweißtes Gewinde umfassen, in welchem Fall die Montageringe vorzugsweise aus Metall bestehen. Besonders bevorzugt besteht in diesem Fall auch die Halterung 7 selbst aus Metall und ist mit den Ringen 7a verschweißt.

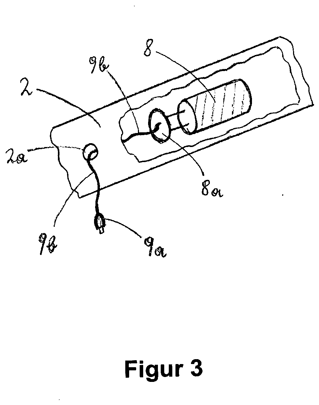

Fig. 3 ist eine teilweise aufgebrochene Ansicht eines Teilabschnitts der Griffstange 2 einer Ausführungsform des Einkaufswagens. Man erkennt, dass innerhalb der Griffstange 2 eine Spannungsquelle 8 untergebracht ist, hier als zylindrische(r) Batterie oder Akkumulator dargestellt ist. Die Batterie bzw. der Akkumulator ist über zwei Kontakte mit einer Steuerschaltung 8a verbunden - hier als runde Platine angedeutet -, an die ihrerseits das Kabel 9b des Steckers 9a angeschlossen ist, das wiederum durch eine Öffnung 2a aus der Griffstange 2 austritt.

Die Steuerschaltung 8a kann zusätzlich eine Leitung umfassen, die sie mit dem Pfandschloss des Einkaufswagens verbindet, so dass über die (elektrisch leitenden) Sperrketten der einzelnen Einkaufswagen in einer Einkaufswagenschlange deren Akkumulatoren 8 von einer externen Spannungsquelle geladen werden können, sofern keine drahtlose Aufladung der inneren Spannungsquelle 8 mittels elektrischer Feldgeneratoren vorgesehen ist.

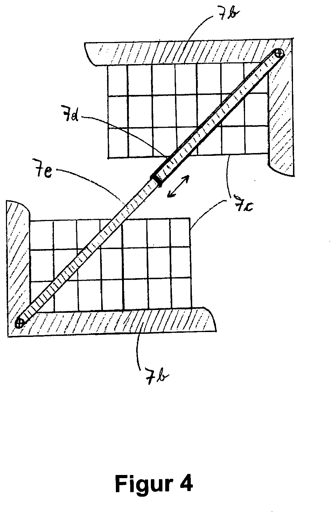

In Fig. 4 ist schließlich die Unterseite einer bevorzugten Ausführungsform der Halterung 7 dargestellt. Diese umfasst zwei L-Profile 7b, an deren Innenrändern jeweils ein Gitter 7c vorgesehen ist, das als ebene Auflagefläche für das tragbare elektronische Gerät dient. Die beiden L-Profile 7b sind an ihrer Unterseite (d.i. die von einem anzudockenden tragbaren elektronischen Gerät abgewandte Seite) über ein Gestänge miteinander verbunden, das aus zwei Stangen 7d und 7e besteht, wovon Stange 7d hohl ausgeführt ist und einen Innendurchmesser aufweist, der geringfügig größer als der Außendurchmesser der Stange 7e ist, so dass Stange 7e in Stange 7d eingeschoben werden kann. Auf diese Weise können die beiden Stangen 7d und 7e relativ zueinander verschoben werden, wie durch den Doppelpfeil angedeutet, was die Gesamtlänge des Gestänges ändert und eine entsprechende Relativbewegung der beiden L-Profile 7b zueinander bewirkt.

Die Höhe der L-Profile 7b in vertikaler Richtung, d.h. normal auf die Ebene von Fig. 4, beträgt vorzugsweise zumindest etwa 1 cm. Vorzugsweise befinden sich die Gitter 7c auf maximal halber Höhe der Profile und/oder sind an deren Unterseite befestigt. Das heißt, sie sind vorzugsweise jeweils in eine (auf entsprechender Höhe vorgesehene) Nut in der Innenwand des L-Profils eingeklemmt, -gegossen, -geschweißt oder -geklebt. Wenn die Gitter 7c an der Unterseite der L-Profile 7b befestigt, d.h. aufgeklebt, -geschraubt oder -geschweißt, sind, muss der vertikale Abstand der dickeren Stange 7d zum anderen L-Profil ausreichen, damit Stange 7e ungehindert in Stange 7d eingeschoben werden kann, ohne dass das Gitter 7c die Bewegung blockiert.

Eine bevorzugte Ausführungsform kann darin bestehen, ein Gitter 7c an der Unterseite eines L-Profils anzubringen, während das andere in einer Nut des anderen L-Profils besfestigt ist. So liegen die beiden Gitter 7c in unterschiedlichen Ebenen und behindern die Bewegung der L-Profile 7b aufeinander zu nicht.

Zum Andocken z.B. eines Smartphones oder Tablet-PCs an eine Dockingstation mit einer solchen Halterung wie in Fig. 4 gezeigt wird das Gerät mit seinen Rändern in paralleler Ausrichtung zu den Schenkeln der L-Profile auf die Gitter 7c aufgelegt, wonach die beiden L-Profile 7b durch äußeren Druck mit beiden Händen aufeinander zu bewegt werden, bis alle vier Schenkel der L-Profile 7b an den Rändern des Geräts anliegen.

In bevorzugten Ausführungsformen kann am Gestänge ein Sperrmechanismus vorgesehen sein, der nach seiner Aktivierung eine weitere Bewegung der beiden Stangen 7d und 7e verhindert, solange er nicht wieder gelöst wird. In der in Fig. 4 dargestellten Ausführungsform der Halterung kann der Sperrmechanismus einfach eine an der äußeren Stange 7d befestigte, aus rutschfestem Material, z.B. Hartgummi, bestehende Klemme (Clip) sein, die beidseitig auf die Verbindungsstelle zwischen den beiden Stangen 7d und 7e aufgesteckt wird.

### ZUSAMMENFASSUNG

Die Erfindung betrifft ein System, umfassend einen Einkaufswagen und ein tragbares elektronisches Gerät, wobei der Einkaufswagen einen Warenkorb (1) mit einer Griffstange (2) und Rädern (3), eine Sperrkette (4) und ein Pfandschloss (5) umfasst, wobei am Einkaufswagen eine Dockingstation (6) für ein tragbares elektronisches Gerät vorgesehen ist, die eine Halterung (7) für das Gerät, eine Spannungsquelle (8), sowie Mittel (9) zur Energieübertragung von der Spannungsquelle (8) auf das Gerät umfasst, wobei:
a) die Dockingstation (6) einen Detektor zum Detektieren des Einsetzens des Geräts in die Halterung (7) und/oder des Verbindens des Geräts mit den Energieübertragungsmitteln (9) umfasst;
b) das Pfandschloss (5) einen elektromagnetischen Riegelmechanismus umfasst, der elektrischer Verbindung mit dem Detektor der Dockingstation steht;
c) der Detektor der Dockingstation in der Lage ist, bei Detektion des Einsetzens des Geräts in die Halterung (7) und/oder des Verbindens des Geräts mit den Energieübertragungsmitteln (9) ein elektrisches oder elektromagnetisches Signal an den elektromagnetischen Riegelmechanismus des Pfandschlosses (5) auszusenden;
d) der elektromagnetische Riegelmechanismus des Pfandschlosses (5) einen Empfänger umfasst, der in der Lage ist, nach Empfang des Signals die Entriegelung der Sperrkette (4) auszulösen;
e) das tragbare elektronische Gerät ein Mobiltelefon oder ein Tablet-PC ist, das/ der einen Akkumulator umfasst, der mittels Energieübertragung von der Spannungsquelle (8) über die Energieübertragungsmittel (9) aufladbar ist; und
f) die Dockingstation (6) einen integrierten Datenspeicher und/oder einen Empfänger zum Empfangen von Daten von einer externen Datenquelle umfasst und dadurch in der Lage ist, Daten an das in die Dockingstation (6) eingesetzte, tragbare elektronische Gerät weiterzuleiten.

## Patentansprüche

1. System, umfassend einen Einkaufswagen und ein tragbares elektronisches Gerät, wobei der Einkaufswagen einen Warenkorb (1) mit einer Griffstange (2) und zumindest drei Rädern (3) an seiner Unterseite, eine Sperrkette (4) und ein Pfandschloss (5) zur Verbindung des Einkaufswagens mit einem anderen der gleichen Bauart umfasst, wobei am Einkaufswagen eine Dockingstation (6) für das tragbare elektronische Gerät vorgesehen ist, die eine Halterung (7) für das Gerät, eine Spannungsquelle (8), sowie Mittel (9) zur Energieübertragung von der Spannungsquelle (8) auf das Gerät umfasst, wobei
a) die Dockingstation (6) einen Detektor zum Detektieren des Einsetzens oder Einlegens des tragbaren elektronischen Geräts in die Halterung (7) und/oder des Verbindens des Geräts mit den Energieübertragungsmitteln (9) umfasst;
b) das Pfandschloss (5) einen elektromagnetischen Riegelmechanismus umfasst, der elektrischer Verbindung mit dem Detektor der Dockingstation steht;
c) der Detektor der Dockingstation in der Lage ist, bei Detektion des Einsetzens des tragbaren elektronischen Geräts in die Halterung (7) und/oder des Verbindens des Geräts mit den Energieübertragungsmitteln (9) ein elektrisches oder elektromagnetisches Signal an den elektromagnetischen Riegelmechanismus des Pfandschlosses (5) auszusenden;
d) der elektromagnetische Riegelmechanismus des Pfandschlosses (5) einen zum Empfangen des Signals geeigneten Empfänger umfasst, der in der Lage ist, nach Empfang des Signals die Entriegelung der Sperrkette (4) auszulösen;
e) das tragbare elektronische Gerät ein Mobiltelefon oder ein Tablet-PC ist, das/der einen Akkumulator umfasst, der mittels Energieübertragung von der Spannungsquelle (8) über die Energieübertragungsmittel (9) aufladbar ist; und
f) die Dockingstation (6) einen integrierten Datenspeicher und/oder einen Empfänger zum Empfangen von Daten von einer externen Datenquelle umfasst und dadurch in der Lage ist, Daten an das in die Dockingstation (6) eingesetzte, tragbare elektronische Gerät weiterzuleiten.

2. System nach Anspruch 1, **dadurch gekennzeichnet, dass** das vom Detektor der Dockingstation ausgesandte Signal ein elektrisches Signal, ein Funksignal und/oder ein Infrarotsignal ist

3. System nach Anspruch 1 oder 2, **dadurch gekennzeichnet, dass** die Spannungsquelle (8) eine Batterie oder ein Akkumulator ist.

4. System nach einem der vorangegangenen Ansprüche, **dadurch gekennzeichnet, dass** die Spannungsquelle (8) innerhalb der Griffstange (2) untergebracht ist.

5. System nach einem der vorangegangenen Ansprüche, **dadurch gekennzeichnet, dass** die Halterung (7) größenverstellbar und so zur Aufnahme tragbarer elektronischer Geräte unterschiedlicher Größe geeignet ist.

6. System nach einem der vorangegangenen Ansprüche, **dadurch gekennzeichnet, dass** die Energieübertragungsmittel (9) zumindest einen elektrischen Stecker (9a) umfassen.

7. System nach Anspruch 6, **dadurch gekennzeichnet, dass** der zumindest eine Stecker (9a) ein USB-Stecker ist.

8. System nach Anspruch 6 oder 7, **dadurch gekennzeichnet, dass** der zumindest eine Stecker (9a) über ein Kabel (9b) mit der Spannungsquelle (8) verbunden ist.

9. System nach einem der Ansprüche 6 bis 8, **dadurch gekennzeichnet, dass** die Energieübertragungsmittel (9) mehrere elektrische Stecker (9a) unterschiedlichen Formats umfassen.

10. System nach einem der Ansprüche 6 bis 9, **dadurch gekennzeichnet, dass** der Detektor der Dockingstation in der Lage ist, die Herstellung einer elektrischen Verbindung zwischen dem tragbaren elektronischen Gerät und dem zumindest einen Stecker (9a) zu detektieren und daraufhin das Signal auszusenden.

11. System nach einem der Ansprüche 1 bis 5, **dadurch gekennzeichnet, dass** die Energieübertragungsmittel (9) einen mit der Spannungsquelle (8) verbundenen elektrischen Feldgenerator zur drahtlosen Energieübertragung auf das tragbare elektronische Gerät umfassen.

12. System nach einem der vorangegangenen Ansprüche, **dadurch gekennzeichnet, dass** die Halterung (7) an der Griffstange (2) des Warenkorbs (1) montiert ist.

13. System nach einem der Ansprüche 3 bis 12, **dadurch gekennzeichnet, dass** die Spannungsquelle (8) ein Akkumulator ist, der durch Energieübertragung von einer externen Spannungsquelle aufladbar ist, wobei gegebenenfalls die Sperrkette (4) elektrisch leitend ist und gleichzeitig zur Energieübertragung von der externen Spannungsquelle zum Akkumulator dient.

14. System nach einem der Ansprüche 3 bis 13, **dadurch gekennzeichnet, dass** die Spannungsquelle (8) ein Akkumulator ist und die Räder (3) mit elektrischen Generatoren zum Aufladen des Akkumulators bei Bewegung des Einkaufswagens versehen sind.

15. System nach einem der vorangegangenen Ansprüche, **dadurch gekennzeichnet, dass** die Halterung (7) einen Sperrmechanismus zur Fixierung des tragbaren elektronischen Geräts darin umfasst, wobei gegebenenfalls der Detektor der Dockingstation in der Lage ist, eine Verriegelung des Sperrmechanismus bei in die Halterung (7) eingelegtem tragbarem elektronischem Gerät zu detektieren und daraufhin das Signal auszusenden.

## Claims

1. A system comprising a supermarket trolley and a portable electronic device, said supermarket trolley comprising a basket (1) with a handle bar (2) and at least three wheels (3) on its bottom side, a security chain (4) and a deposit lock (5) for connecting said supermarket trolley with another supermarket trolley of the same type, said supermarket trolley being provided with a docking station (6) for said portable electronic device, said docking station (6) comprising a retainer (7) for said device, a voltage source (8) and means (9) for transmitting energy from the voltage source (8) to said device, wherein
a) said docking station (6) comprises a detector for detecting the insertion of said portable electronic device into said retainer (7) and/or the connection of said device with said energy transmission means (9);
b) said deposit lock (5) comprises an electromagnetic locking mechanism which is electronically connected to said detector of said docking station;
c) said detector of said docking station is capable of transmitting an electric or electromagnetic signal to said electromagnetic locking mechanism of said deposit lock (5) when detecting the insertion of said portable electronic device into said retainer (7) and/or the connection of said device with said energy transmission means (9);
d) said electromagnetic locking mechanism of said deposit lock (5) comprises a receiver suitable for receiving said signal, said receiver being capable of triggering the unlocking of said security chain (4) after having received said signal;
e) said portable electronic device is a mobile phone or a tablet PC comprising a rechargeable battery which is rechargeable by transmitting energy from said voltage source (8) via said energy transmission means (9); and
f) said docking station (6) comprises an integrated data storage and/or a receiver for receiving data from an external data source, thus being capable of transmitting data to said portable electronic device which has been inserted into said docking station (6).

2. The system according to claim 1, **characterised in that** said signal transmitted by said detector of said docking station is an electric signal, a radio signal, and/or an infrared signal.

3. The system according to claim 1 or claim 2, **characterised in that** said voltage source (8) is a battery or a rechargeable battery.

4. The system according to any one of the preceding claims, **characterised in that** said voltage source (8) is housed within said handle bar (2).

5. The system according to any one of the preceding claims, **characterised in that** said retainer (7) is adjustable to different sizes and thus suitable for accommodating portable electronic devices of different sizes.

6. The system according to any one of the preceding claims, **characterised in that** said energy transmission means (9) comprise at least one electric plug (9a).

7. The system according to claim 6, **characterised in that** said at least one plug (9a) is a USB plug.

8. The system according to claim 6 or claim 7, **characterised in that** said at least one plug (9a) is connected to said voltage source (8) via a cable (9b).

9. The system according to any one of the claims 6 to 8, **characterised in that** said energy transmission means (9) comprise several electric plugs (9a) of different types.

10. The system according to any one of the claims 6 to 9, **characterised in that** said detector of said docking station is capable of detecting the establishment of an electric connection between said portable electronic device and said at least one plug (9a) and subsequently transmitting said signal.

11. The system according to any one of the claims 1 to 5, **characterised in that** said energy transmission means (9) comprise an electric field generator which is connected to said voltage source (8) and serves the purpose of transmitting energy wirelessly to said portable electronic device.

12. The system according to any one of the preceding claims, **characterised in that** said retainer (7) is mounted to said handle bar (2) of said basket (1).

13. The system according to any one of the claims 3 to 12, **characterised in that** said voltage source (8) is a rechargeable battery which is rechargeable via the transmission of energy from an external voltage source, said security chain (4) optionally being electrically conductive and at the same time serving the purpose of transmitting energy from the external voltage source to said rechargeable battery.

14. The system according to any one of the claims 3 to 13, **characterised in that** said voltage source (8) is a rechargeable battery and that said wheels (3) are provided with electric generators for recharging said rechargeable battery when said supermarket trolley is moved.

15. The system according to any one of the preceding claims, **characterised in that** said retainer (7) comprises a locking mechanism for fixing said portable electronic device therein, said detector of said docking station optionally being capable of detecting the locking of said locking mechanism when said portable electronic device is inserted into said retainer and subsequently transmitting said signal.

## Revendications

1. Système comprenant un chariot de supermarché et un dispositif électronique portable, le chariot de supermarché comprenant un panier (1) avec une barre (2) de maintien et au moins trois roues (3) sur sa partie inférieure, une chaîne (4) de verrouillage et une serrure (5) de consigne pour relier le chariot de supermarché avec un autre du même type, sur le chariot de supermarché étant prévu une station (6) d'accueil pour le dispositif électronique portable, qui comprend un support (7) pour le dispositif, une source (8) de tension ainsi que des moyens (9) pour transmettre de l'énergie de la source (8) de tension au dispositif,
a) la station (6) d'accueil comprenant un détecteur pour détecter le positionnement du dispositif électronique portable dans le support (7) et/ou la connexion du dispositif avec les moyens (9) de transmission d'énergie ;
b) la serrure (5) de consigne comprenant un mécanisme de verrouillage électromagnétique, qui est connecté électriquement avec le détecteur de la station d'accueil ;
c) le détecteur de la station d'accueil étant capable d'émettre un signal électrique ou électromagnétique pour le mécanisme électromagnétique de verrouillage de la serrure (5) de consigne lorsqu'il détecte le positionnement du dispositif électronique portable dans le support (7) et/ou la connexion du dispositif avec les moyens (9) de transmission d'énergie ;
d) le mécanisme électromagnétique de verrouillage de la serrure (5) de consigne comprenant un récepteur apte à recevoir le signal, qui est capable de déclencher le déverrouillage de la chaîne (4) de verrouillage, après avoir reçu le signal ;
e) le dispositif électronique étant un téléphone portable ou un ordinateur à tablette, qui comprend un accumulateur, qui peut être chargé grâce à la transmission d'énergie à partir de la source (8) de tension moyennant les moyens (9) de transmission d'énergie ; et
f) la station (6) d'accueil comprenant une mémoire de données intégrée et/ou un récepteur pour recevoir des données d'une source de données externe, et étant ainsi capable de transmettre des dates au dispositif électrique portable, placé dans la station (6) d'accueil.

2. System selon la revendication 1, **caractérisé en ce que** le signal émis par le détecteur de la station d'accueil est un signal électrique, un signal radio et/ou un signal infrarouge.

3. Système selon l'une des revendications 1 ou 2, **caractérisé en ce que** la source (8) de tension est une batterie ou un accumulateur.

4. Système selon l'une quelconque des revendications précédentes, **caractérisé en ce que** la source (8) de tension est disposée à l'intérieur la barre (2) de maintien.

5. Système selon l'une quelconque des revendications précédentes, **caractérisé en ce que** les dimensions du support (7) peuvent être adaptées, le support étant ainsi apte à accueillir des dispositifs électroniques portables de dimensions différentes.

6. Système selon l'une quelconque des revendications précédentes, **caractérisé en ce que** les moyens (9) de transmission d'énergie comportent au moins un connecteur (9a) électrique.

7. Système selon la revendication 6, **caractérisé en ce que** l'au moins un connecteur (9a) est un connecteur USB.

8. Système selon l'une des revendications 6 ou 7, **caractérisé en ce que** l'au moins un connecteur (9a) est connecté à la source (8) de tension moyennant un câble (9b).

9. Système selon l'une quelconque des revendications 6 à 8, **caractérisé en ce que** les moyens (9) de transmission d'énergie comprennent plusieurs connecteurs (9a) de format différent.

10. Système selon l'une quelconque des revendications 6 à 9, **caractérisé en ce que** le détecteur de la station d'accueil est capable de détecter l'établissement d'une connexion électrique entre le dispositif électronique portable et l'au moins un connecteur (9a), et d'ensuite émettre le signal.

11. Système selon l'une quelconque des revendications 1 à 5, **caractérisé en ce que** les moyens (9) de transmission d'énergie comprennent un générateur de champ électrique, connecté à la source (8) de tension, pour la transmission d'énergie sans fil au dispositif électronique portable.

12. Système selon l'une quelconque des revendications précédentes, **caractérisé en ce que** le support (7) est monté sur la barre (2) de maintien du panier (1).

13. Système selon l'une quelconque des revendications 3 à 12, **caractérisé en ce que** la source (8) de tension est un accumulateur, qui peut être chargé grâce à la transmission d'énergie à partir d'une source de tension externe, la chaîne (4) de verrouillage agissant éventuellement comme conducteur électrique et servant en même temps à transmettre de l'énergie de la source de tension externe à l'accumulateur.

14. Système selon l'une quelconque des revendications 3 à 13, **caractérisé en ce que** la source (8) de tension est un accumulateur et **en ce que** les roues (3) sont équipées avec des générateurs électriques pour charger l'accumulateur lorsque chariot de supermarché est en mouvement.

15. Système selon l'une quelconque des revendications précédentes, **caractérisé en ce que** le support (7) comprend un mécanisme de verrouillage pour y fixer le dispositif électronique portable, le détecteur de la station d'accueil étant éventuellement capable de détecter le verrouillage du mécanisme de verrouillage lorsque le dispositif électronique portable est positionné dans le support (7), et d'ensuite émettre le signal.
